# EUROPÄISCHE PATENTSCHRIFT

(11) **EP 1 644 626 B1**
(45) Veröffentlichungstag und Bekanntmachung des Hinweises auf die Patenterteilung: **22.11.2006**
(21) Anmeldenummer: 04741793.6
(22) Anmeldetag: 14.06.2004
(51) Int. Cl.: F02D 9/12, F02B 29/08, F16K 1/12, F16K 31/06, F01L 9/04

(54) **ZUSATZSTEUERVENTILEINRICHTUNG FÜR EINEN EINLASSKANAL EINER KOLBENBRENNKRAFTMASCHINE**
SUPPLEMENTARY CONTROL VALVE DEVICE FOR AN INLET PORT OF A PISTON INTERNAL COMBUSTION ENGINE
DISPOSITIF SOUPAPE DE COMMANDE AUXILIAIRE POUR UN CONDUIT D'ADMISSION D'UN MOTEUR A COMBUSTION INTERNE A PISTON

(30) Priorität: 16.07.2003 DE 10332440
(43) Veröffentlichungstag der Anmeldung: 12.04.2006
(73) Patentinhaber: SIEMENS AKTIENGESELLSCHAFT, 80333 München (DE)
(72) Erfinder: BERNARDING, Eugen, 61250 Usingen (DE); MANN, Thomas, 61130 Nidderau (DE); REIMANN, Christian, 61273 Wehrheim (DE); SEVERIEN, Herbert, 63589 Linsengericht (DE)
(86) Internationale Anmeldenummer: PCT/EP2004/051103
(87) Internationale Veröffentlichungsnummer: WO 2005/008045

(56) Entgegenhaltungen:
- DE-A- 3 026 133
- DE-A- 3 739 494
- DE-A- 10 137 828
- US-B1- 6 422 184

## Beschreibung

Die Erfindung bezieht sich auf eine Zusatzsteuerventileinrichtung für einen Einlasskanal einer Kolbenbrennkraftmaschine. Zusatzsteuerventileinrichtungen sind bekannt. Ihre Funktionsweise wird beispielsweise in der DE 101 37 828 A1 beschrieben. Bei dieser Zusatzsteuerventileinrichtung ist es vorgesehen, ein Ventilglied anzuordnen, das im Wesentlichen pilzförmig ausgebildet ist und das in Richtung der Längsachse der Zusatzsteuerventileinrichtung reversibel beweglich in einer Führung geführt ist. Bei diesem Ventilglied ist an einem Schaft ein hutförmiger Teller angeordnet, der zu der vom Einlasskanal abgewandten Seite hin konkav mit einem Scheitelpunkt ausgebildet ist. Dieses Ventilglied wird im Betrieb zwischen dem Portalmagneten und dem Fangmagneten bewegt. Auf diese Weise wird die jeweils gewünschte Öffnungsstellung bzw. Schließstellung der Zusatzsteuerventileinrichtung eingestellt. Der Schaft des Ventilgliedes endet an einem Bund. Zwischen dem Bund und dem Boden des Sackloches, in dem der Schaft geführt wird, stützt sich eine erste Feder ab. Zwischen dem Bund und dem anderen Ende des Sackloches stützt sich eine weitere Feder ab. Auf diese Weise bildet das Ventilglied zusammen mit den beiden Federn ein schwingungsfähiges System, welches von den Federn in einer Mittellage gehalten wird. Die Eigenfrequenz des schwingungsfähigen Systems ist durch Federkonstanten und das Gewicht des Ventilgliedes gegeben. Auf diese Weise wird sichergestellt, dass ein außerordentlich rascher Wechsel zwischen der Offen- und Schließstellung möglich ist, wobei von dem Portalmagnet und dem Fangmagnet, zwischen denen das Ventilglied reversibel beweglich geführt wird, jeweils nur die Haltekraft aufgebracht werden muss und die kinetische Energie in den Federn gespeichert wird. Bei solchen Zusatzsteuerventileinrichtungen ist jedoch nachteilig, dass sich im Portalmagnet Temperaturen von bis zu 230 °C einstellen und große Probleme bei der Wärmeabfuhr entstehen.

Der Erfindung liegt daher die Aufgabe zugrunde, eine Zusatzsteuerventileinrichtung für einen Einlasskanal einer Kolbenbrennkraftmaschine zu schaffen, bei der es möglich ist, die im Portalmagneten im Betrieb anfallende Wärme auf möglichst rasche Weise abzuführen.

Die der Erfindung zugrunde liegende Aufgabe wird durch eine Zusatzsteuerventileinrichtung für einen Einlasskanal einer Kolbenbrennkraftmaschine mit einem zwischen einem Portalmagneten und einem Fangmagneten in Richtung der Längsachse reversibel beweglich in einer Führung geführten Ventilglied gelöst, bei der das Magnetjoch des Portalmagneten mindestens eine Verlängerung aufweist, die unmittelbar an mindestens einem Steg anliegt, der an seinem, der Verlängerung abgewandten Ende mit der Führung verbunden ist. Unter dem Portalmagnet und dem Fangmagnet ist jeweils die Kombination von Spule und Magnetjoch zu verstehen. Es handelt sich dabei um Ringmagnete. Bei dem Ventilglied handelt es sich um die Kombination von einem Schaft und einem hutförmigen Teller, der zu der vom Einlasskanal abgewandten Seite hin konkav mit einem Scheitelpunkt ausgebildet ist. Die Verlängerung des Magnetjochs ist beispielsweise teilringförmig ausgebildet und kann gegebenenfalls auch konisch verlaufen. Sie liegt unmittelbar an mindestens einem Steg an, wobei eine bevorzugte Ausgestaltung in der Anordnung von drei Stegen gegeben ist. Für jeden Steg ist dann eine zugehörige Verlängerung des Magnetjoches vorzusehen. Der mindestens eine Steg besteht aus Metall, vorzugsweise aus Aluminium. Eine feste Verbindung zwischen der Verlängerung und dem mindestens einen Steg ist nicht zwingend erforderlich. In einigen Fällen kann es jedoch vorteilhaft sein, punktförmig feste Verbindungen vorzusehen. Es hat sich in überraschender Weise gezeigt, dass die im Portalmagneten anfallende Wärmemenge auf einfache Weise relativ schnell aus der Zusatzsteuerventileinrichtung abgeführt werden kann, wenn das Magnetjoch des Portalmagneten mindestens eine Verlängerung aufweist, die unmittelbar an mindestens einem Steg anliegt, der an seinem, der Verlängerung abgewandten Ende mit der Führung verbunden ist. Dabei ist besonders vorteilhaft, dass die Zusatzsteuerventileinrichtung in ihren Abmessungen dafür nicht größer ausgelegt werden muss.

Eine bevorzugte Ausgestaltung der Erfindung besteht darin, dass der mindestens eine Steg senkrecht zur Längsachse der Führung angeordnet ist. Auf diese Weise kann die Zusatzsteuerventileinrichtung relativ kompakt ausgeführt werden. Gleichzeitig wird die Stabilität in vorteilhafter Weise erhöht.

Gemäß einer weiteren bevorzugten Ausgestaltung der Erfindung bestehen der mindestens eine Steg und die Führung aus einem Einzelteil. Dadurch wird die Herstellung der Zusatzsteuerventileinrichtung erleichtert, da der mindestens eine Steg und die Führung in einem einzelnen Arbeitsschritt hergestellt werden können.

Eine weitere bevorzugte Ausgestaltung der Erfindung sieht vor, dass die Verlängerung im Endbereich, der direkt am mindestens einen Steg anliegt, einen Teil des Gehäuses bildet. Unter dem Begriff Gehäuse ist dabei derjenige Teil zu verstehen, in dem der Portalmagnet fixiert ist. Dieses Gehäuse besteht in der Regel aus Kunststoff. Bildet die Verlängerung im Endbereich ein Teil des Gehäuses, so erleichtert dies zusätzlich die Wärmeabfuhr aus dem Portalmagneten über die Verlängerung an die Umgebung. Gleichzeitig wird die Stabilität in der Zusatzsteuerventileinrichtung erhöht.

Gemäß einer weiteren Ausgestaltung der Erfindung ist am, dem Portalmagneten abgewandten Ende des Endbereiches eine Öse angeordnet. Die Anordnung der Öse erfolgt dabei in der Regel besonders vorteilhaft senkrecht zur Längsachse der Führung. Die Öse weist beispielsweise mindestens eine Bohrung auf, die zur Aufnahme von Befestigungsmitteln, wie beispielsweise Schrauben, dient. Dabei ist vorteilhaft, dass die Zusatzsteuerventileinrichtung als Ganzes auf relativ einfache Weise an einem Rahmen im Einlasskanal der Kolbenbrennkraftmaschine befestigt werden kann.

Eine weitere bevorzugte Ausgestaltung der Erfindung sieht vor, dass der mindestens eine Steg an seinem, der Führung abgewandten Ende einen ersten horizontalen Anschlag und einen zweiten vertikalen Anschlag für die Verlängerung aufweist. Der erste horizontale Anschlag weist dabei eine Anschlagsfläche auf, die dem Portalmagneten zugewandt ist. Auf diese Weise wird das Kontaktieren der Verlängerung mit dem mindestens einen Steg in vorteilhafter Weise begünstigt.

Nach einer weiteren Ausgestaltung der Erfindung ist vorgesehen, dass der erste horizontale Anschlag und der zweite vertikale Anschlag eine gemeinsame Kante aufweisen, und die Verlängerung an ihrem, dem Portalmagneten abgewandten Ende eine zu dem ersten horizontalen Anschlag und dem zweiten vertikalen Anschlag komplementär ausgebildete Nut aufweist. Auf diese vorteilhafte Weise wird ein optimales Anliegen der Verlängerung an dem mindestens einen Steg bei geringstmöglichem Bauraum erreicht.

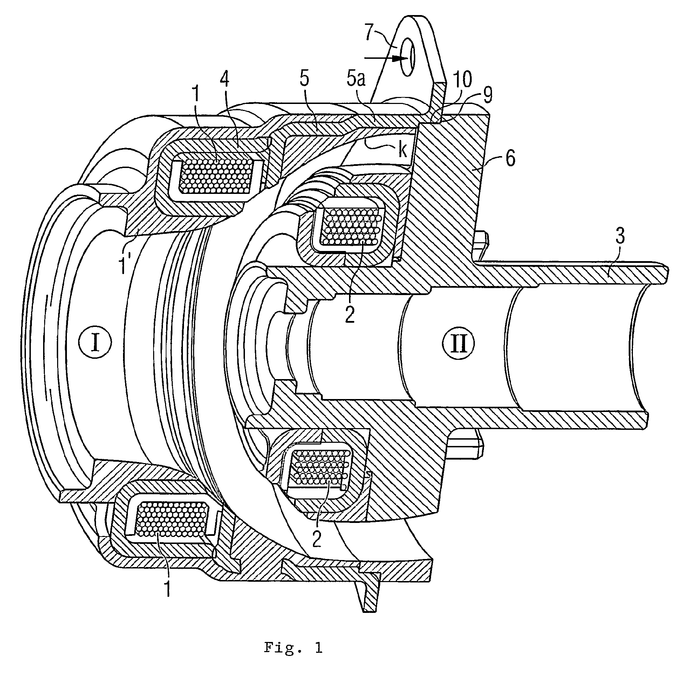

Die Erfindung wird nachfolgend anhand der Zeichnung (Fig.) näher und beispielhaft erläutert.
- Fig.: zeigt die Zusatzsteuerventileinrichtung im Längsschnitt in dreidimensionaler Form.

In Fig. ist die Zusatzsteuerventileinrichtung für einen Einlasskanal einer Kolbenbrennkraftmaschine im Längsschnitt in dreidimensionaler Form dargestellt. In dieser Zusatzsteuerventileinrichtung wird ein Ventilglied (nicht dargestellt) zwischen einem Portalmagneten 1 und einem Fangmagneten 2 in Richtung der Längsachse reversibel beweglich in einer Führung 3 geführt. Der innere Aufbau der Führung 3 ist aus Gründen der Übersichtlichkeit nicht dargestellt. Das Magnetjoch 4 des Portalmagneten 1, das mehrteilig gestaltet ist, weist mindestens eine Verlängerung 5 auf, die unmittelbar an mindestens einem Steg 6 anliegt, der an seinem, der Verlängerung 5 abgewandten Ende mit der Führung 3 verbunden ist. Der mindestens eine Steg 6 ist dabei senkrecht zur Längsachse der Führung 3 angeordnet. Der mindestens eine Steg 6 und die Führung 3 bestehen dabei aus einem Einzelteil. Die Verlängerung 5 bildet im Endbereich 5a, der direkt am mindestens einen Steg 6 anliegt, einen Teil des Gehäuses 1'. Am, dem Portalmagneten 1 abgewandten Ende des Endbereiches 5a ist eine Öse 7 angeordnet. Der Steg 6 weist an seinem der Führung 3 abgewandten Ende einen ersten horizontalen Anschlag 8 und einen zweiten vertikalen Anschlag 9 für die Verlängerung 5 auf. Der erste horizontale Anschlag 8 und der zweite vertikale Anschlag 9 weisen eine gemeinsame Kante auf, und die Verlängerung 5 weist an ihrem, dem Portalmagenten 1 abgewandten Ende eine zu dem ersten horizontalen Anschlag 8 und dem zweiten vertikalen Anschlag 9 komplementär ausgebildete Nut 10 auf. Auf diese Weise wird das Anliegen der Verlängerung 5 an dem mindestens einen Steg 6 auf kleinstem Bauraum in besonders vorteilhafter Weise erreicht, so dass die Strömungskante k auf besonders einfachem Wege in ihrem Verlauf optimiert werden kann, indem das Gehäuse 1', in welchem der Portalmagnet 1 fixiert ist, in entsprechender Weise bearbeitet wird. In besonders bevorzugter Weise wird der Fangmagnet 2 direkt an der Führung 3 angeordnet. Dadurch wird sichergestellt, dass auch die Wärme, die im Fangmagneten 2 anfällt, auf schnelle und einfache Weise aus der Zusatzsteuerventileinrichtung abgeführt werden kann. Es ist jedoch auch möglich, den Fangmagneten 2 in der Zusatzsteuerventileinrichtung örtlich auf andere Weise zu fixieren. Über die Öse 7 lässt sich die Zusatzsteuerventileinrichtung auf besonders einfache Weise vorteilhaft, beispielsweise an einem Rahmen, befestigen. Dazu wird ein Befestigungsmittel, beispielsweise eine Schraube, in die Bohrung der Öse 7 in Pfeilrichtung eingeführt und mit dem Rahmen verschraubt. Dabei ist des Weiteren vorteilhaft, dass durch diese Art der Befestigung die erste Teileinheit I., die im Wesentlichen aus dem Portalmagneten 1, dem Gehäuse 1' sowie der Verlängerung 5 mit ihrem Endbereich 5a und der Öse 7 besteht, zur festen Anlage an die zweite Teileinheit II. gebracht wird, die unter anderem aus dem Fangmagneten 2, dem mindestens einen Steg 6 sowie der Führung 3 besteht. Ferner ist vorteilhaft, dass durch den ersten horizontalen Anschlag 8 und dem zweiten vertikalen Anschlag 9 in Verbindung mit der komplementär ausgebildeten Nut 10 ein optimaler Abstand zwischen der ersten Teileinheit I. und der zweiten Teileinheit II., bzw. zwischen dem Portalmagneten 1 und dem Fangmagneten 2 eingestellt werden kann. Dadurch kann der Bewegungsablauf des Ventilgliedes (nicht dargestellt) zwischen dem Portalmagneten 1 und dem Fangmagneten 2 ebenfalls optimiert werden, ohne dass dabei eine feste Verbindung zwischen der ersten Teileinheit I. und der zweiten Teileinheit II. zwingend erforderlich ist.

## Patentansprüche

1. Zusatzsteuerventileinrichtung für einen Einlasskanal einer Kolbenbrennkraftmaschine mit einem zwischen einem Portalmagneten (1) und einem Fangmagneten (2) in Richtung der Längsachse reversibel beweglich in einer Führung (3) geführten Ventilglied, wobei der Portalmagnet (1) von einem Gehäuse (1') fixiert ist, **dadurch gekennzeichnet, dass** das Gehäuse (1') aus Kunststoff besteht und das Magnetjoch (4) des Portalmagneten (1) mindestens eine Verlängerung (5) aufweist, die unmittelbar an mindestens einem Steg (6) anliegt, der an seinem, der Verlängerung (5) abgewandten Ende mit der Führung (3) verbunden ist.

2. Zusatzsteuerventileinrichtung nach Anspruch 1, bei der der mindestens eine Steg (6) senkrecht zur Längsachse der Führung (3) angeordnet ist.

3. Zusatzsteuerventileinrichtung nach Anspruch 1 oder Anspruch 2, bei der der mindestens eine Steg (6) und die Führung (3) aus einem Einzelteil bestehen.

4. Zusatzsteuerventileinrichtung nach einem der Ansprüche 1 bis 3, bei der die Verlängerung (5) im Endbereich (5a), der direkt am mindestens einen Steg (6) anliegt, einen Teil des Gehäuses (1') bildet.

5. Zusatzsteuerventileinrichtung nach Anspruch 4, bei der am, dem Portalmagneten (1) abgewandten Ende des Endbereiches (5a) eine Öse (7) angeordnet ist.

6. Zusatzsteuerventileinrichtung nach einem der Ansprüche 1 bis 5, bei der der mindestens eine Steg (6) an seinem, der Führung (3) abgewandten Ende einen ersten horizontalen Anschlag (8) und einen zweiten vertikalen Anschlag (9) für die Verlängerung (5) aufweist.

7. Zusatzsteuerventileinrichtung nach Anspruch 6, bei der der erste horizontale Anschlag (8) und der zweite vertikale Anschlag (9) eine gemeinsame Kante aufweisen und die Verlängerung (5) an ihrem, dem Portalmagneten (1) abgewandten Ende eine zu dem ersten horizontalen Anschlag (8) und dem zweiten vertikalen Anschlag (9) komplementär ausgebildete Nut (10) aufweist.

## Claims

1. Additional control valve device for an inlet channel of a reciprocating internal combustion engine having a valve element, which is guided such that it can move reversibly in a guide (3) in the direction of the longitudinal axis between a portal magnet (1) and a trap magnet (2), with the portal magnet (1) being fixed by a housing (1'), **characterized in that** the housing (1') is composed of plastic and the magnet yoke (4) of the portal magnet (1) has at least one extension (5) which rests directly on at least one web (6), which is connected to the guide (3) at its end which is remote from the extension (5).

2. Additional control valve device according to Claim 1, in which the at least one web (6) is arranged at right angles to the longitudinal axis of the guide (3).

3. Additional control valve device according to Claim 1 or Claim 2, in which the at least one web (6) and the guide (3) are composed of a single part.

4. Additional control valve device according to one of Claims 1 to 3, in which the extension (5) forms a part of the housing (1') in the end area (5a) which rests directly on the at least one web (6).

5. Additional control valve device according to Claim 4, in which an eye (7) is arranged at that end of the end area (5a) which is remote from the portal magnet (1).

6. Additional control valve device according to one of Claims 1 to 5, in which the at least one web (6) has a first horizontal stop (8) and a second vertical stop (9) for the extension (5) at its end which is remote from the guide (3).

7. Additional control valve device according to Claim 6, in which the first horizontal stop (8) and the second vertical stop (9) have a common edge, and the extension (5) has a groove (10), which is designed to be complementary to the first horizontal stop (8) and to the second vertical stop (9), at its end which is remote from the portal magnet (1).

## Revendications

1. Ensemble soupape de commande auxiliaire pour un canal d'admission d'un moteur à combustion interne à pistons, ayant un organe soupape mobile conduit dans un guide (3), d'une façon réversible, dans la direction de l'axe longitudinal, entre un aimant portique (1) et un aimant de capture (2), l'aimant portique (1) étant fixé par un boîtier (1'), **caractérisé par le fait que** le boîtier (1') est en matière plastique et que la culasse (4) de l'aimant portique (1) comporte au moins une prolongation (5) appliquée directement sur au moins une aile (6) qui, à son extrémité opposée à la prolongation (5), est liée au guide (3).

2. Ensemble soupape de commande auxiliaire selon la revendication 1, dans lequel la au moins une aile (6) est disposée perpendiculairement à l'axe longitudinal du guide (3).

3. Ensemble soupape de commande auxiliaire selon la revendication 1 ou la revendication 2, dans lequel la au moins une aile (6) et le guide (3) se composent d'une pièce unique.

4. Ensemble soupape de commande auxiliaire selon l'une des revendications 1 à 3, dans lequel la prolongation dans sa partie terminale (5a), qui est directement appliquée sur l'aile (6), forme une partie du boîtier (1').

5. Ensemble soupape de commande auxiliaire selon la revendication 4, dans lequel, à l'extrémité opposée à l'aimant portique (1) de la partie terminale (5a), est ménagé un oeillet (7).

6. Ensemble soupape de commande auxiliaire selon l'une des revendications 1 à 5, dans lequel la au moins une aile (6) comporte, à son extrémité opposée au guide (3), une première butée horizontale (8) et une deuxième butée verticale (9) destinées à la prolongation (5).

7. Ensemble soupape de commande auxiliaire selon la revendication 6, dans lequel la première butée horizontale (8) et la deuxième butée verticale (9) ont une arête commune et la prolongation (5) comporte, à son extrémité opposée à l'aimant portique (1), une rainure (10) ménagée d'une façon complémentaire à la première butée horizontale (8) et à la deuxième butée verticale (9).
